(19)

Europäisches
Patentamt
European
Patent Office
Office européen
des brevets

(11) **EP 2 216 983 A1**

(12) **EUROPEAN PATENT APPLICATION**

(43) Date of publication:
**11.08.2010 Bulletin 2010/32**

(51) Int Cl.:
***H04N 5/14*** (2006.01)

(21) Application number: **09152137.7**

(22) Date of filing: **05.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicants:
• **Mitsubishi Electric R&D Centre Europe B.V.**
**20 Frederick Sanger Road**
**The Surrey Research Park**
**Guildford, Surrey GU2 7YD (GB)**
Designated Contracting States:
**GB**
• **Mitsubishi Electric Corporation**
**Chiyoda-ku**
**Tokyo 100-8310 (JP)**
Designated Contracting States:
**AT BE BG CH CY CZ DE DK EE ES FI FR GR HR HU IE IS IT LI LT LU LV MC MK MT NL NO PL PT RO SE SI SK TR**

(72) Inventor: **Paschalakis, Dr. Stavros**
**Guildford, Surrey GU1 2PD (GB)**

(74) Representative: **HOFFMANN EITLE**
**Patent- und Rechtsanwälte**
**Arabellastrasse 4**
**81925 München (DE)**

(54) **Detection of wipe transitions in video**

(57)     A method of processing a sequence of video frames to determine whether a wipe transition exists between shots of the sequence comprises, for each video frame, calculating its differences from a previous frame using the colour and spatial position information of the pixels in the current frame and the previous frame, projecting the differences onto one or more projection axes or other bases, calculating a measure of the likelihood that an abrupt shot transition has taken place for each of a plurality of points on a projection based on the projection value at each point for a plurality of frames including the current frame, and detecting wipes by detecting characteristic geometric patterns in the temporal sequence of the said measure of likelihood in one or more projections.

**FIG. 3**

## Description

This invention relates to the detection of wipe gradual transitions between shots of a digital video frame sequence, and has particular application in the segmentation of digital video into shots.

In recent years there has been a sharp increase in the amount of digital video data that consumers have access to and keep in their video libraries. These videos may take the form of commercial DVDs and VCDs, personal camcorder recordings, off-air recordings onto HDD and DVR systems, video downloads on a personal computer or mobile phone or PDA or portable player, and so on. This growth of digital video libraries is expected to continue and accelerate with the increasing availability of new high capacity technologies such as Blu-Ray and HD-DVD. However, this abundance of video material is also a problem for users, who find it increasingly difficult to manage their video collections. To address this, new automatic video management technologies are being developed that allow users efficient access to their video content and functionalities such as video categorisation, summarisation, searching and so on.

The realisation of such functionalities relies on the analysis and understanding of the individual videos. In turn, the first step in the analysis of a video is almost always its structural segmentation. This means the segmentation of the video into its constituent shots. This step is very important, since its performance will have an impact on the quality of the results of any subsequent video analysis steps.

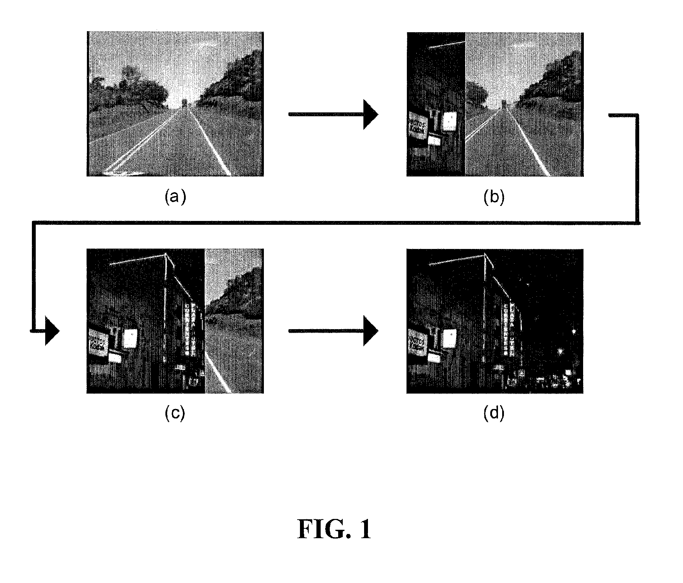

A shot is typically defined as the video segment captured between the "Start Recording" and "Stop Recording" operation of a camera. A video is then put together as a sequence of many shots. For example, an hour of a TV program will typically contain somewhere in the region of 1000 shots. There are various ways in which shots are put together in the editing process in order to form a complete video. The simplest mechanism is to simply append shots, whereby the last frame of one shot is immediately followed by the first frame of the next shot. This gives rise to an abrupt shot transition, commonly referred to as a "cut". There are also more complicated mechanisms for joining shots, using gradual shot transitions which last for a number of frames. A common example of a gradual shot transition is the wipe, whereby the new shot gradually replaces the old shot along the path of a line moving across the image or according to some geometric pattern. The most common types of wipe are horizontal and vertical wipes. An example of a horizontal left-to-right wipe can be seen in FIG. 1.

In general, abrupt transitions are much more common than gradual transitions, accounting for over 99% of all transitions found in video. Therefore, the correct detection of abrupt shot transitions is very important, and is examined in our co-pending patent applications EP 1 640 914 A2 and EP 1 640 913 AI. On the other hand, the detection of gradual transitions is also very important, since such transitions have a high semantic significance. For example, wipes are commonly used to indicate the passage of time or change of scene in a story. Therefore, various researchers have proposed methods for the detection of wipe transitions.

In Wu, M., Wolf, W., Liu, B., "An Algorithm for Wipe Detection", In Proceedings of 5th IEEE International Conference on Image Processing (ICIP98), vol. 1, pp. 893-897, 1998, a method is presented for the detection of wipe transitions in video, which proceeds as follows. First, the pixelwise luminance differences between consecutive frames is calculated. Then, provided that the overall average difference for a frame exceeds a threshold, the pixelwise differences for that frame are projected onto an axis, e.g. the horizontal axis, or vertical axis, or a diagonal axis. Then, the standard deviation of the projected differences is calculated. Then, provided that the standard deviation metric for a frame exceeds a threshold, it is detected as part of a wipe if it is part of a plateau of appropriate width in the standard deviation metric time sequence. A drawback of this method is that simple video events, such as fast object motion or light changes, will result in high projected differences and corrupt the simple standard deviation metric, leading to false detections and to misses. Another drawback is that it is difficult to predetermine what the appropriate width of the plateau, therefore the length of the transition, should be. A wipe can last from just a fraction of a second to a few seconds, making it difficult to base a detection on the length of the suspected transition.

In Ngo, C. W., Pong, T. C., Chin, R. T., "Detection of Gradual Transitions through Temporal Slice Analysis", In Proceedings of 18th IEEE International Conference on Computer Vision and Pattern Recognition (CVPR99), vol. 1, pp. 36-41, 1999, another method is presented for the detection of wipe transitions in video. The method relies on the analysis of spatio-temporal slices, which are 2D images formed by taking a small central horizontal or vertical or diagonal portion of each frame across a sequence of frames. For example, a horizontal spatio-temporal slice is formed by taking the central row, or weighted average of a few central rows, of each frame in a temporal sequence of frames. Put differently, considering a video as a 3D volume with axes $x, y$ (the frame spatial axes) and $z$ (the temporal axis), a horizontal slice is, in actuality, a slice of the video along the $z$ axis. Vertical and diagonal slices are formed analogously. In the method proposed by Ngo et al., three slices are used for the detection of wipes, namely a horizontal, a vertical and a diagonal slice. Edge and texture features are then extracted from the slices, and a Markov energy model is used to describe the contextual dependency of spatio-temporal slices and detect wipes. This method is further extended in Ngo, C. W., Pong, T. C., Chin, R. T., "A Robust Wipe Detection Algorithm", in Proceedings of 4th Asian Conference on Computer Vision (ACCV2000), pp. 246-251, 2000. According to the extended method, wipes are detected as with the original method of Ngo et al. but, as an additional step, following the detection of a wipe, a comparison is performed in the colour histograms of the neighbouring blocks either side of the detected wipe transition in the spatio-temporal slices. If the histogram difference is less than a predetermined threshold, the detected wipe is considered a false detection. Otherwise, the Hough transform is used to precisely locate the wipe boundaries. The main drawback with both the methods proposed by Ngo et al. is that the representation of the video through spatio-temporal slices is a very limited one. In effect, transitions are detected by examining only a very small part of each frame in the video. A wipe between two shots which happen to be similar in the spatial locations covered by one or more slices will be difficult to discern in those slices. On the other hand, simple video events, such as object or camera motion, may greatly affect the spatio-temporal slices even if it has a small effect on the overall video frames, and can result in false detections. The histogram comparison post-processing step in the extended method can alleviate this to an extent, but it entails an additional computational load.

In Drew, M. S., Li, Z.-N., Zhong, X., "Video Dissolve and Wipe Detection via Spatio-Temporal Images of Chromatic Histogram Differences", in Proceedings of 7th IEEE International Conference in mage Processing (ICIP2000), vol. 3, pp. 929-932, 2000, another method is presented for the detection of wipe transitions in video. With that method, a two dimensional chromaticity histogram is formed for each column (or row or diagonal) of each frame in the video. Then, histogram intersection is performed between corresponding histograms of successive frames. Following this, wipes are detected from the spatio-temporal pattern of the histogram intersection values. A drawback with this method is that, while it considers the entire content of frames for wipe detection, the histogram of a frame region, i.e. of a column, or row or diagonal, provides only a limited representation of that region. Thus, the columns of two shots involved in a wipe will be considered very similar according to this method when they have a broadly similar colour content, even if the spatial arrangement of their colour content is entirely different.

In US 5,990,980 "Detection of Transitions in Video Sequences", another method is presented for the detection of wipe transitions. With that method, frame dissimilarity measure (FDM) values are generated for pairs of frames in a video sequence that are separated by a specified timing window size. Each FDM value is calculated as the ratio of the net dissimilarity $D_{net}$ between the two frames and a cumulative dissimilarity $D_{cum}$, calculated as the sum of the $D_{net}$ values for frame pairs between the aforementioned two frames. $D_{net}$ and $D_{cum}$ may be calculated, for example, as frame histogram differences or pixel-wise frame differences. Then, peaks in the FDM data that exceed a certain first threshold indicate a transition, and FDM values on either side of the peak that fall below a certain second threshold indicate the bounds of the transition.

Various methods that detect wipes from video compression characteristics have also been proposed. In US 6,473,459 B1 "Scene Change Detection", a method is disclosed for the detection of wipes based on motion characteristic values calculated from the values of motion vectors and predictive-coded picture characteristic values derived from coefficients on frequency domains in blocks. In US 7,050,115 B2, another method is disclosed for the detection of wipes based on the number and spatio-temporal characteristics of intra-coded macroblocks. The drawback of both this method and the aforementioned method in US 6,473,459 B1 is that they are applicable only to videos which are compressed in a certain manner.

In view of the limitations in the prior art, the present invention provides a method of processing a sequence of video frames to determine whether a wipe transition exits between shots of the sequence, the method comprising:

(a) for each of a plurality of frames in the sequence, using the pixel values of at least some of the pixels in the frame and the pixel values of pixels at the same spatial positions in a preceding frame in the sequence to generate difference values representing differences between the frames for those pixels, and projecting the difference values onto a base to generate a plurality of projection values for the frame, such that each projection value has a respective position on the base and comprises a value derived from the difference values of a plurality of pixels;

(b) processing the projection values generated for different frames to calculate a respective abrupt shot transition measure for each position on the respective base of each frame representing the likelihood that an abrupt shot transition has taken place in the pixels from whose difference values the projection value for that position was derived; and

(c) determining whether a wipe transition is present by determining whether a predetermined geometric pattern exists in a two-dimensional array comprising the abrupt shot transition measures of the bases of a plurality of frames aligned in an order corresponding to the temporal sequence of the frames.

The present invention also provides an apparatus for processing a sequence of video frames to determine whether a wipe transition exits between shots of the sequence, the apparatus comprising:

means for processing each of a plurality of frames in the sequence to generate difference values representing differences between at least some of the pixels in the frame and a preceding frame;

means for projecting the difference values for each frame onto a base for the frame to generate a plurality of projection values for the frame, such that each projection value has a respective position on the base and comprises a value derived from the difference values of a plurality of pixels;

means for processing the projection values on each base of a plurality of frames to calculate a respective abrupt shot transition measure for each position on each base representing the likelihood that an abrupt shot transition has taken place in the pixels used to derive the projection value for that position; and

means for determining whether a predetermined geometric pattern exists in a two-dimensional array comprising the abrupt shot transition measures of the bases of a plurality of frames aligned in an order corresponding to the temporal sequence of the frames.

The present invention also provides a computer program product, embodied for example as a storage medium storing computer program instructions or as a signal carrying computer program instructions, for programming a programmable processing apparatus to become operable to perform the processing operations above.

Embodiments of the invention will now be described, by way of example only, with reference to the accompanying drawings, in which:

Figures 1(a)-1(d) show an example of a horizontal left-to-right wipe transition;

Figure 2 schematically shows the components of a first embodiment of the invention, together with the notional function processing units into which the processing apparatus component may be thought of as being configured when programmed by computer program instructions;

Figure 3 shows the processing operations performed by the processing apparatus in Figure 2 in a first part of the processing to detect a wipe transition;

Figures 4(a)-4(f) shows the results of the frame differencing and projection processes performed in Figure 3 for an example pair of video frames;

Figure 5 shows the processing operations performed by the processing apparatus in Figure 2 in a second part of the processing to detect a wipe transition;

Figures 6 and 7(a)-7(c) show two-dimensional arrangements comprising the abrupt shot transition measures calculated for different frames at step S510 in Figure 5 arranged in an order corresponding to the temporal sequence of video frames from which they were derived;

Figure 8 shows the lines detected in the two-dimensional arrangement of Figure 6 as a result of the processing performed at steps S520 and S530 in Figure 5;

Figure 9 schematically shows the components of a second embodiment of the invention, together with the notional function processing units into which the processing apparatus component may be thought of as being configured when programmed by computer program instructions; and

Figure 10 shows the processing operations performed by the processing apparatus in Figure 9 in the first part of the processing to detect a wipe transition.

First Embodiment

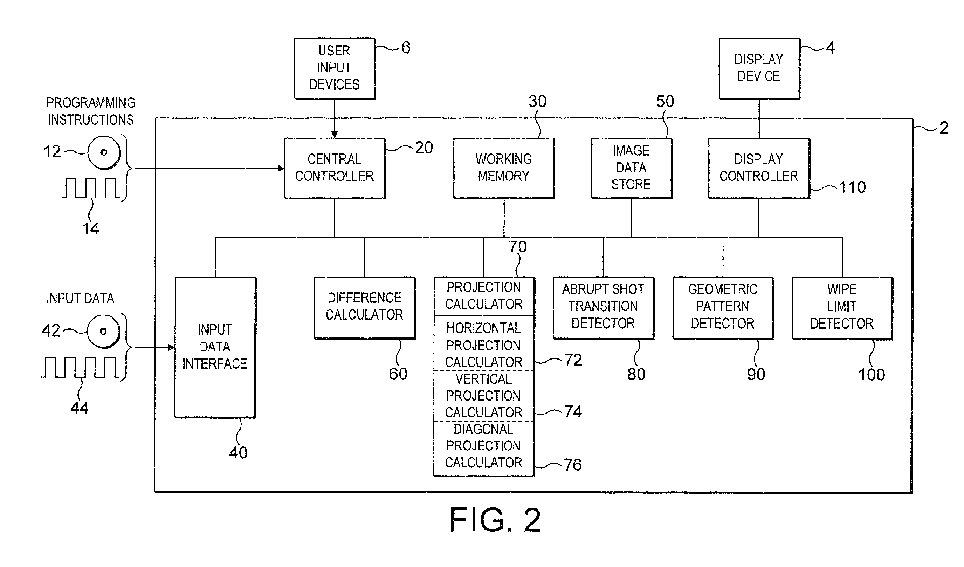

Referring to FIG. 2, a first embodiment of the present invention comprises a programmable processing apparatus 2, such as a personal computer (PC), containing, in a conventional manner, one or more processors, memories, graphics cards etc, together with a display device 4, such as a conventional personal computer monitor, and user input devices 6, such as a keyboard, mouse etc.

The processing apparatus 2 is programmed to operate in accordance with programming instructions input, for example, as data stored on a data storage medium 12 (such as an optical CD ROM, semiconductor ROM, magnetic recording medium, etc), and/or as a signal 14 (for example an electrical or optical signal input to the processing apparatus 2, for example from a remote database, by transmission over a communication network (not shown) such as the Internet or by transmission through the atmosphere), and/or entered by a user via a user input device 6 such as a keyboard.

As will be described in more detail below, the programming instructions comprise instructions to program the processing apparatus 2 to become configured to process data defining a sequence of video frames in order to determine whether a wipe transition occurs between shots within the sequence. More particularly, for each video frame $f_i$, processing apparatus 2:

- calculates its differences from a previous frame using the colour and spatial position information of the pixels in the current frame and the previous frame;

- projects the differences onto one or more projection axes or other bases;

- calculates a measure of the likelihood that an abrupt shot transition has taken place for each of a plurality of points on a projection based on the projection value at each point for a plurality of frames including the current frame; and

- detects wipes by detecting characteristic geometric patterns in the temporal sequence of the said measure of likelihood in one or more projections.

As a result of this processing, the embodiment provides a robust technique for accurately detecting wipe transitions in video, which:

- uses the colour information of all the pixels in each video frame;

- uses the spatial position information of all the pixels in each video frame;

- makes no assumptions about the length of the transition;

- has a high detection performance at different frame resolutions, including DC and sub-DC in the context of compressed video; and

- does not make assumptions about the compression of the video.

When programmed by the programming instructions, processing apparatus 2 can be thought of as being configured as a number of functional units for performing processing operations.

Examples of such functional units and their interconnections are shown in FIG. 2. The units and interconnections illustrated in FIG. 2 are, however, notional, and are shown for illustration purposes only to assist understanding; they do not necessarily represent units and connections into which the processor, memory etc of the processing apparatus 2 actually become configured.

Referring to the functional units shown in FIG. 2, central controller 20 is operable to process inputs from the user input devices 6, and also to provide control and processing for the other functional units. Memory 30 is provided for use by central controller 20 and the other functional units.

Input data interface 40 is operable to receive input data comprising frames of digital video data (either in compressed or non-compressed form), and to control the storage of the input data within image data store 50 of processing apparatus 2. The input data may be input to processing apparatus 2 for example as data stored on a storage medium 42, or as a signal 44 transmitted to the processing apparatus 2.

Difference calculator 60 is operable to calculate difference values representing the differences between frames in the input video sequence. In this embodiment, difference calculator 60 is arranged to calculate the difference values for each frame by comparing the pixel values for at least some of the pixels in the frame with the pixel values of pixels at the same spatial positions in a preceding frame to determine absolute differences between the pixel values.

Projection calculator 70 is arranged to project difference values calculated by difference calculator 60 onto a plurality of different bases for each video frame. In this embodiment, projection calculator 70 comprises a horizontal projection calculator 72 for projecting the difference values onto a horizontal line, a vertical projection calculator 74 for projecting the difference values onto a vertical line, and a diagonal projection calculator 76 for projecting the difference values onto a diagonal line. As will be explained below, each of these different bases is used to determine whether a different type of wipe transition exists between shots of the video sequence. Each of the projection calculators 72, 74, 76 is further operable to normalize the projected difference values, if required.

Abrupt shot transition detector 80 is operable to process the projected values generated by projection calculator 70 for each individual base to calculate a respective abrupt shot transition measure for each location on the base. The abrupt shot transition measure calculated for each location defines a measure of the likelihood that an abrupt shot transition has taken place in the pixels corresponding to that location on the base - that is, the pixels from whose difference values the projection value at that location was derived.

Geometric pattern detector 90 is operable to process the abrupt shot transition measure values calculated by abrupt shot transition detector 80 for each type of base (that is, in the present embodiment, a horizontal line base, a vertical line base, and a diagonal line base) in order to determine whether a geometric pattern exists in the abrupt shot transition measure values for that type of base representing a wipe transition. More particularly, for each type of base, geometric pattern detector 90 is operable to process data defining a two-dimensional arrangement comprising the abrupt shot transition measures generated for that type of base from a plurality of the video frames arranged in an order corresponding to the temporal sequence of the frames. Geometric pattern detector 90 is arranged to process such a two-dimensional arrangement for each type of base to determine whether a geometric pattern representing a wipe transition exists within the two-dimensional arrangement. By processing the two-dimensional arrangements for a plurality of different types of base in this way, geometric pattern detector 90 is operable to detect geometric patterns representing different types of wipe transitions, thereby detecting the presence of one or more of these transitions between shots of the video sequence.

Wipe limit detector 100 is operable to process the data defining each geometric pattern identified by geometric pattern detector 90 in order to find the temporal boundaries of the wipe transition.

Display controller 110, under the control of central controller 20, is operable to control display device 4 to display the results of the wipe transition detection performed by processing apparatus 2.

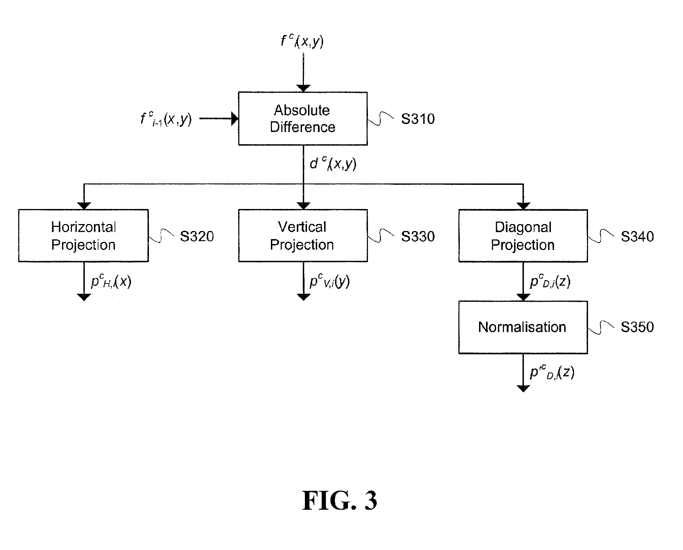

The processing operations performed by the apparatus in FIG. 2 to process the input video frames to determine whether a wipe transition exists between shots will now be described with reference to FIGS. 3 - 8.

Referring to FIG. 3, processing is performed for a video frame sequence

$$f_i^c(x,y) \text{ with } i \in [0, T-1], \quad c \in \{C_1, ..., C_K\}, \quad x \in [0, M-1], \quad y \in [0, N-1] \tag{1}$$

where $i$ is the frame index, $T$ is the total number of frames in the video, $c$ is the colour channel index, $C_1...C_K$ are the colour channels and $K$ is the number of colour channels, e.g. $\{C_1,C_2,C_3\}=\{R,G,B\}$ or $\{C_1,C_2,C_3\}=\{Y,C_b,C_r\}$, $x$ and $y$ are spatial coordinates and $M$ and $N$ are the horizontal and vertical frame dimensions respectively. There are therefore K pixel values ($C_1...C_K$) for each pixel of each frame.

At step S310, difference calculator 60 calculates the absolute difference $d$ between each frame and the previous frame as

$$d_i^c(x,y) = \left| f_i^c(x,y) - f_{i-1}^c(x,y) \right| \tag{2}$$

These absolute differences are then projected onto one or more appropriate axes by projection calculator 70. For example, the projection $p^c_{H,i}(x)$ onto the horizontal axis is calculated by horizontal projection calculator 72 in step S320 as

$$p_{H,i}^c(x) = \sum_{y=0}^{N-1} d_i^c(x,y) \tag{3}$$

and the projection $p^c_{V,i}(y)$ onto the vertical axis is calculated by vertical projection calculator 74 in step S330 as

$$p_{V,i}^c(y) = \sum_{x=0}^{M-1} d_i^c(x,y) \tag{4}$$

Each projection value $p$ is therefore a combined value derived from the difference values $d$ of a respective plurality of pixels in a predetermined direction within the frame.

In each case, the number of pixels projected on each point of the projection axis is the same, i.e. equal to the vertical frame dimension $N$ for the horizontal projection and equal to the horizontal frame dimension $M$ for the vertical projection, so normalisation of the projection is not required.

In step S340, diagonal projection calculator 76 projects the difference values $d$ onto a diagonal axis. In this embodiment, the diagonal axis extends from the top-left corner of the frame to the bottom-right corner of the frame, although another diagonal axis could be used instead. Such a diagonal projection can be best visualised as a rotation of the frame by some angle $\phi$ according to

$$\begin{bmatrix} x' \\ y' \end{bmatrix} = \begin{bmatrix} \cos\phi & -\sin\phi \\ \sin\phi & \cos\phi \end{bmatrix} \cdot \begin{bmatrix} x \\ y \end{bmatrix} \quad\quad (5)$$

until the said diagonal projection axis becomes horizontal or vertical, followed by the appropriate horizontal or vertical projection onto the rotated projection axis. In general, with a diagonal projection $P^c_{D,i}(z)$, the number of pixels projected on each point of the projection axis will not be the same. In the present embodiment of the invention, a normalisation procedure is therefore performed in step S350 by diagonal projection calculator 76 to address this imbalance and normalise the projection values in $p^c_{D,i}(z)$ to produce the normalised $p'^c_{D,i}(z)$.

Although projections onto horizontal, vertical and diagonal lines can be sufficient for the detection of most wipe patterns, alternative embodiments of the invention may employ projections onto other bases, such as multiple line segments, box bases, and so on, followed by a normalisation step where appropriate.

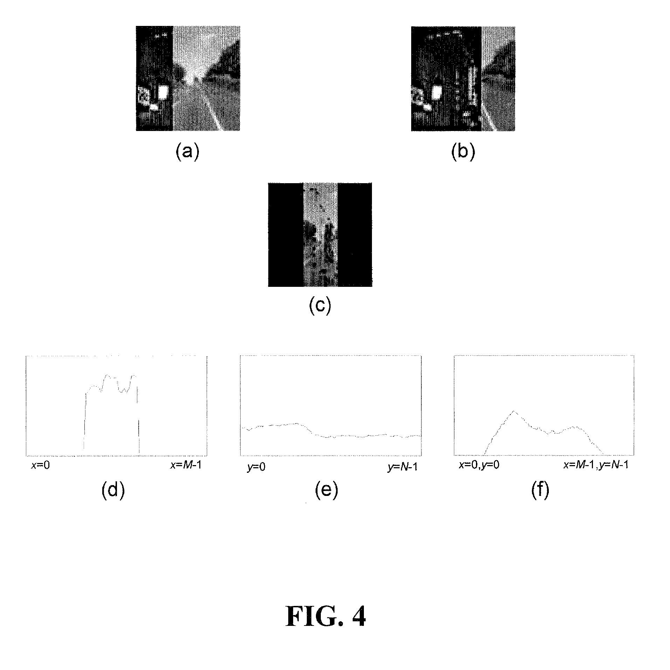

For illustrative purposes, FIG. 4 shows an example of the frame differencing and projection processes. More specifically, FIGS. 4a and 4b show the luminance channel Y for the two frames $f_{i-1}$ and $f_i$ which are undergoing a horizontal left-to-right wipe and, without loss of generality, have been subsampled to a resolution of 64x64 pixels. FIG. 4c shows the absolute pixelwise difference $d^Y_i$ of the two frames, according to equation (2) above. Then, FIG. 4d shows the horizontal projection $p^Y_{H,i}$ of the differences in FIG. 4c, according to equation (3), FIG. 4e shows the vertical projection $p^Y_{V,i}$ of the differences in FIG. 4c, according to equation (4), and FIG. 4f shows the normalised diagonal projection $p'^Y_{D,i}$ of the differences in FIG. 4c, onto a line which extends from the top-left corner to the bottom-right corner of the frame.

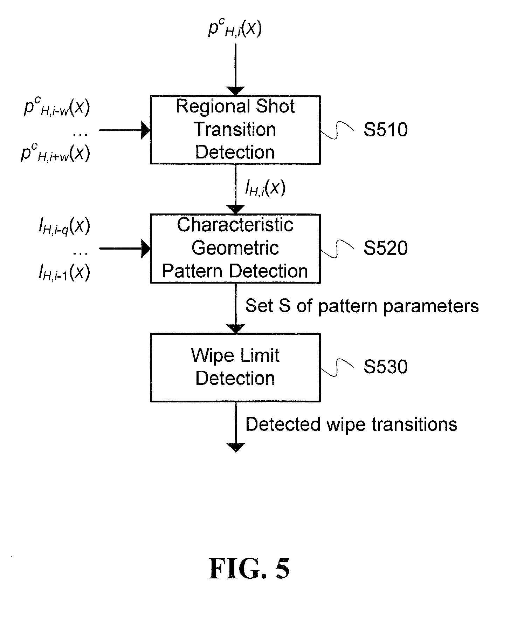

Next, processing apparatus 2 processes each calculated projection or normalised projection in accordance with the processing operations illustrated in FIG. 5. More specifically, FIG. 5 illustrates the processing of the horizontal projection $p^c_{H,i}(x)$, but the processing is substantially the same for the other projections.

At step S510, the projection is processed by a regional abrupt shot transition detection process performed by abrupt shot transition detector 80, which determines whether a new shot is observable at each point on the projection axis, i.e. whether a shot change has taken place between the current frame and the previous frame for the corresponding spatial region. There are many ways in which the projection can be processed to determine whether a shot change has taken place. According to the present embodiment, abrupt shot transition detector 80 advantageously calculates a measure of the likelihood that an abrupt shot transition has taken place for a given point on the projection based not only on the value of the projection at that given point, but also on the values of the projection for that given point in past frames as well as in future frames, i.e. based on the amount of change for the corresponding spatial region that can be observed in a plurality of past and future frames. At step S510, a measure $l_{H,i}(x)$ of the likelihood that an abrupt shot transition has taken place at point $x$, i.e. for the frame column $x$, is calculated by considering the $p_H$ values in a temporal window of size $2w+1$ and centred on $p_{H,i}$, i.e. the values in $[p^c_{H,i-w}(x), p^c_{H,i+w}(x)]$. First, a cross-channel projection measure $s_{H,i}(x)$ is calculated as

$$s_{H,i}(x) = \sum_c p^c_{H,i}(x) \quad\quad (6)$$

and then $l_{H,i}(x)$ is calculated as

$$l_{H,i}(x) = \begin{cases} 1 & \text{if } s_{H,i}(x) > \psi \text{ and } s_{H,i}(x) > \xi \cdot s_{H,i+k}(x) \ \forall k \in [-w,0) \cup (0,w] \\ 0 & \text{otherwise} \end{cases} \qquad (7)$$

where $\psi$ and $\xi$ are thresholds, and typically $\xi \geq 1$. Thus, equation (7) specifies 1 as a binary measure, taking a value of 1 when an abrupt shot change is detected and 0 otherwise, and requires that the cross-channel projection value $S^c_{H,i}(x)$ be larger than a threshold $\psi$ and $\xi$ times larger than every other value in the temporal window in order for a shot change to be detected for column $x$ of frame $f_i$. By considering projection values in a temporal window in order to reach a decision about each region of each frame, the robustness of the measure $l$ to noise is increased, making the abrupt shot change detection process more reliable.

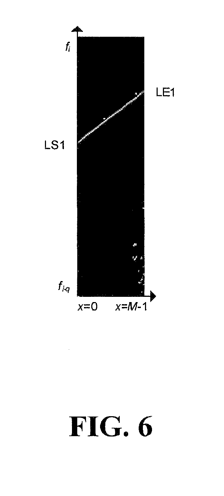

FIG. 6 shows a plot of the 2D function $l_{H,i}(x)$, with a temporal parameter $i$ and a spatial parameter $x$, so that the abrupt shot transition measure values $l_H$ are arranged in a 2D array with the values $l_H$ being arranged in one of the dimensions according to the positions on the horizontal projection axes and in the other dimension by the temporal order of the frames. This can be thought of as aligning the horizontal projections for the frames in the temporal order of the frames so that corresponding positions on the horizontal projections align in the direction of the frame order.

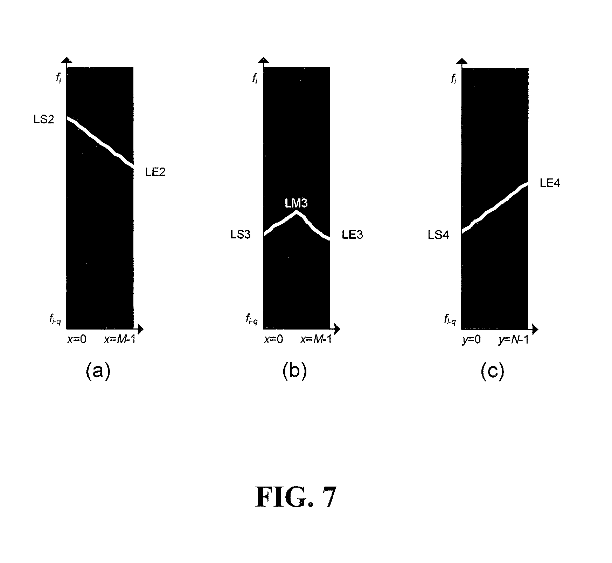

The white values in FIG. 6 indicate $l_{H,i}(x) = 1$ and black values indicate $l_{H,i}(x) = 0$. The plot is derived from a segment of a real video, the segment comprising q frames, and with $q = 250$ in this instance. The segment contains a horizontal left-to-right wipe, which gives rise to the line extending from point LS1 to point LE1. This geometric pattern is characteristic of left-to-right horizontal wipes in the 2D function $l_H$ calculated from a horizontal projection. Other types of wipe will generate different characteristic geometric patterns, as illustrated in FIG. 7. For example, a right-to-left horizontal wipe will generate a line in $l_H$, as illustrated in FIG. 7a between points LS2 and LE2. A combined left-to-right and right-to-left horizontal wipe will generate two connected line segments in $l_H$, as illustrated in FIG. 7b between points LS3 and LM3 and points LM3 and LE3. Thus, wipes may be detected by detecting characteristic geometric patterns in $l_H$.

In step S520 of FIG. 5, geometric pattern detector 90 performs the detection of characteristic geometric patterns in $l_{H,i}(x)$. There are many ways of doing this, for example by applying conventional edge detection teachings. However, the present embodiment advantageously employs a method based on the Hough transform of $l_{H,i}(x)$. More specifically, for the purposes of the Hough transform, a line may be described as

$$r = x \cdot \cos\theta + i \cdot \sin\theta \qquad (8)$$

where $(r,\theta)$ represent the length and angle from the origin of a normal to the line. By plotting all the $(r,\theta)$ points defined by each point $(x,i)$ with $l_{H,i}(x) = 1$, Cartesian space points become sinusoids in the Hough space $G(r,\theta)$. Then, Cartesian space points which are collinear give rise to sinusoids which intersect at some $(r,\theta)$ point in Hough space. Thus, peaks in Hough space indicate multiple collinear points in Cartesian space, therefore lines, which, as described earlier, are indicative of wipe transitions. A peak at some point in Hough space may be detected based on applying a threshold to the value at that point. In the present embodiment of the invention, a peak at a given point is detected based on the value assigned to that point as well as the values assigned to neighbouring points. In step S520, a peak is detected at some point $(r,\theta)$ in Hough space G if

$$\left(G(r,\theta) > \alpha\right) \wedge \left(G(r,\theta) > \beta \cdot \sum_{m=-t}^{-1} G(r+m,\theta)\right) \wedge \left(G(r,\theta) > \beta \cdot \sum_{n=1}^{t} G(r+n,\theta)\right) \qquad (9)$$

where $\alpha$ and $\beta$ are thresholds and $t$ specifies a local neighbourhood of size $2t+1$.

Having found the set S of the geometric pattern parameters which satisfy equation (9), wipe limit detector 100 performs processing in step S530 to find the temporal boundaries of the wipe transition from equation (8) by giving different values to $x$ and solving it for $i$. For illustrative purposes,

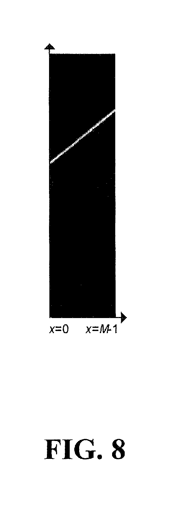

FIG. 8 shows the lines detected in the plot of FIG. 6 after processing according to equations (8) and (9). It is possible that not one, but many very similar lines may be detected for a single wipe, as is the case in FIG. 8, where multiple overlapping lines are plotted. In that case, wipe limit detector 100 identifies all those candidate wipes as being the same actual wipe, for example based on their respective peak proximity in Hough space, and chooses one candidate wipe as representative of the actual wipe, for example the wipe with the highest peak in Hough space.

The above process may be used for detecting the line or multiple line segments that characterise a wipe. In an alternative embodiment of the invention, the generalised Hough transform may be employed instead of the Hough transform, which allows for the detection not only of lines, but of other general shapes which may be parameterised. In yet another embodiment of the invention, a different transform for detecting the characteristic geometric pattern of wipes may be used, such as the Radon transform. The generalised Hough transform and the Radon transform are not examined here, but are expertly described in van Ginkel, M., Hendriks, C. L., van Vliet, L. J., "A short introduction to the Radon and Hough transforms and how they relate to each other", Number QI-2004-01 in the Quantitative Imaging Group Technical Report Series, Delft University of Technology.

Other types of wipe will generate different characteristic geometric patterns in $I$ arising from other projections. For instance, a vertical top-to-bottom wipe will generate a line in $I_V$, as illustrated in FIG. 7c between points LS4 and LE4. Usually, not all types of projection are used for the detection of each wipe pattern, e.g. $I_H$ is usually sufficient for the detection of horizontal wipes, and $I_V$ is usually sufficient for the detection of vertical wipes, and $I_D$ is usually most suited for the detection of diagonal wipes. As previously mentioned, FIG. 5 illustrates the processing of the horizontal projection $p^c_{H,i}(x)$, but the processing of other projections or normalised projections is fundamentally the same. Although projections onto horizontal, vertical and diagonal lines can be sufficient for the detection of most wipe patterns, alternative embodiments of the invention may employ projections onto other bases, such as multiple line segments, box bases, and so on, and their processing is substantially the same.

Second Embodiment

A second embodiment of the present invention will now be described.

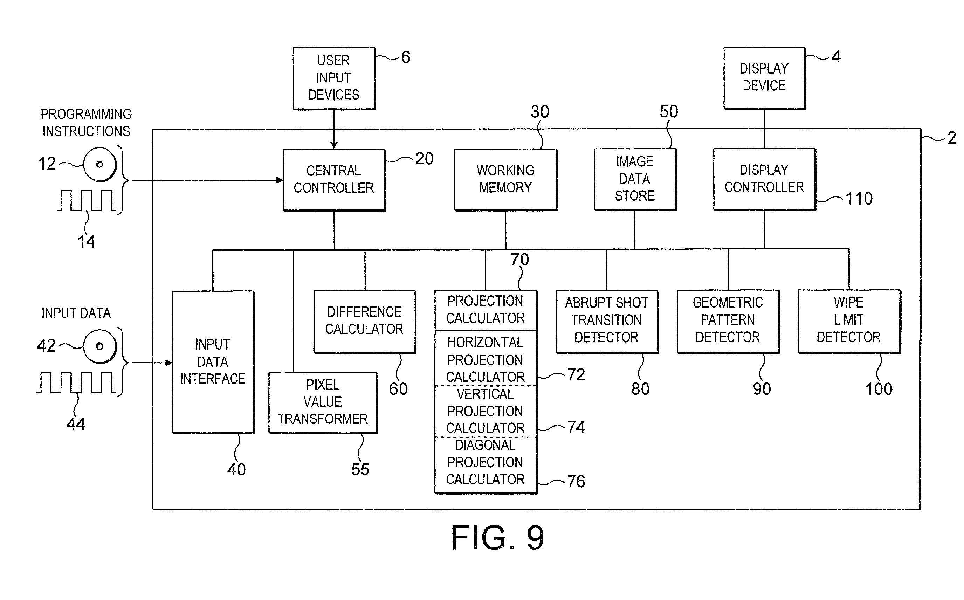

Figure 9 shows the components of the second embodiment. These components are the same as those of the first embodiment illustrated in Figure 2, with the exception that pixel value transformer 55 is now provided.

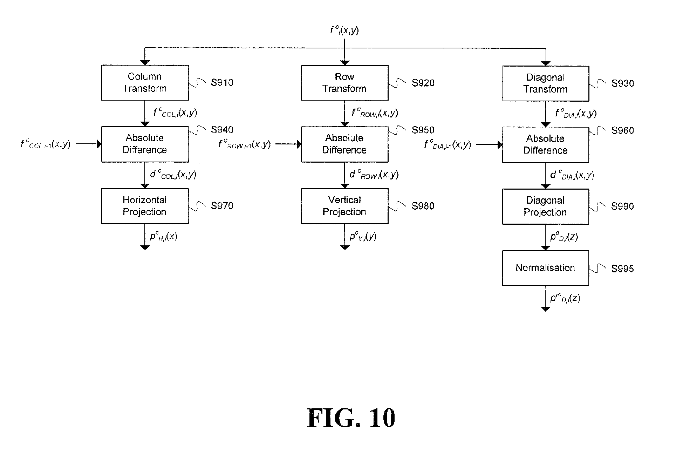

In the first embodiment, the absolute differences between corresponding pixels in two frames are calculated and then projected onto a projection base, such as a horizontal, vertical, or diagonal axis, for the detection of wipes. In the second embodiment of the invention, the processing operations shown in FIG. 3 are replaced by those shown in FIG. 10, in which the 1D series of pixels in each frame which would be projected onto the same point of a projection axis are first transformed by pixel value transformer 55 by an appropriate transform, then absolute differences between corresponding transformed values in two frames are calculated, and then these differences are projected onto the appropriate projection axis, such as a horizontal, vertical, or diagonal axis, for the detection of wipes. For example, in the processing operations of the first embodiment according to FIG. 3, the absolute differences between corresponding pixels in corresponding columns of two frames are projected onto the same point of a horizontal projection axis. In the second embodiment according to FIG. 10, each column in each frame undergoes a transform, then absolute differences between corresponding transformed values in corresponding columns of two frames are calculated, and then these differences are projected onto the horizontal axis. Thus, in the second embodiment of the invention according to FIG. 10: for the projection of differences onto a horizontal axis, the said transform is applied to each column of each frame; for the projection of differences onto a vertical axis, the said transform is applied to each row of each frame; and for the projection of differences onto another base, the said transform is applied to the 1D series of pixels which correspond to the same point of the projection base.

The transform applied by pixel value transformer 55 to each column or each row or, more generally, each 1D series of pixels, may be for example a wavelet transform, such as a Haar transform or Daubechies' transform. In step S910 of FIG. 10, in the present embodiment, for each 1D column $x$ of pixels with values $f^c_i(x,0)$, $f^c_i(x,1)$, ..., $f^c_i(x,N-1)$, the Haar transform of that column is calculated as follows. The differences, also referred to as high-pass coefficients, $(f^c_i(x,0)-f ci(x,1))/2$, $(f^c_i(x,2)-f^c_i(x,3))/2$, ..., $(f^c_i(x,N-2)-f^c_i(x,N-1))/2$ are calculated, along with the sums, also referred to as low-pass coefficients, $(f^c_i(x,0)+f^c_i(x,1))/2$, $(f^c_i(x,2)+f^c_i(x,3))/2$, ..., $(f^c_i(x,N-2)+f^c_i(x,N-1))/2$. The low-pass coefficients form a subsampled version of the original 1D column, from which high-pass and low-pass coefficients are again calculated. This process repeats until the final low-pass coefficient is calculated. The Haar transform of the 1D column of N values is then the set of all $N$-1 high-pass coefficients calculated, along with the final low-pass coefficient. In alternative implementations of the Haar transform, the sums and differences are divided by the value $\sqrt{2}$ instead of 2. Replacing all the columns in $f^c_i(x,y)$ with the transformed columns gives the transformed frame $f^c_{COL,i}(x,y)$.

Then, at step S940, the difference $d^c_{COL,i}(x,y)$ is calculated according to equation (2). The horizontal projection at step S970 is then calculated according to equation (3).

Step S920 proceed in a similar fashion to step S910, but the Haar transform is calculated along rows instead of columns. Similarly, in step S930, the Haar transform is calculated along diagonal 1D series of pixels. Steps S950 and S960 proceed in a similar fashion to step S940, and steps S980 and S990 proceed in a similar fashion to step S970. The normalisation step S995 proceeds as discussed in the first embodiment. The processing of the projections or normalised projections for the detection of wipes also proceeds as described in the first embodiment with reference to FIG. 5.

Although projections onto horizontal, vertical and diagonal lines can be sufficient for the detection of most wipe patterns, alternative embodiments may employ projections onto other bases, such as multiple line segments, box bases, and so on, and their processing is substantially the same.

The advantage of calculating frame differences from the transformed frames as in FIG. 10 is that the subsequent regional abrupt shot transition detection process is more reliable. The disadvantage is the increased computational complexity that the embodiment of FIG. 10 entails compared to that of FIG. 3.

Modifications and Variations

In the embodiments previously described, every frame in the video is processed for the detection of the wipe transitions. In alternative embodiments of the invention, different temporal step sizes may be used, resulting in the processing of every second frame or every third frame and so on, resulting in the accelerated processing of the video.

Also, in the embodiments previously described, a measure $l_i$ of the likelihood that an abrupt shot transition has taken place for a point on projection $p_i$ is calculated by considering the $p$ values in a temporal window of size $2w+1$ and centred on $p_{,i}$. In alternative embodiments of the invention, the said window can assume any size and need not be centred on $p_i$. Thus, in one alternative embodiment, the temporal window may start on $p_i$, while in a different alternative embodiment the temporal window may end on $p_i$. For example, for a temporal window of size $w+1$ starting on $p_i$, equation (7) may be changed to

$$l_{H,i}(x) = \begin{cases} 1 & \text{if } s_{H,i}(x) > \psi \text{ and } s_{H,i}(x) > \xi \cdot s_{H,i+k}(x) \ \forall k \in (0, w] \\ 0 & \text{otherwise} \end{cases} \qquad (10)$$

Furthermore, the method of equations (6) and (7), or its alternate equation (10), is just one example of the calculation of the measure $l$. In an alternative embodiment of the invention, a cross-channel projection measure s need not be calculated. Instead, $l$ may be calculated for each channel, and then a cross-channel $l$ may be calculated. Thus, equations (6) and (7) may be replaced with

$$l_{H,i}^c(x) = \begin{cases} 1 & \text{if } p_{H,i}^c(x) > \gamma \text{ and } p_{H,i}^c(x) > \delta \cdot p_{H,i+k}^c(x) \ \forall k \in [-w, 0) \cup (0, w] \\ 0 & \text{otherwise} \end{cases} \qquad (11)$$

$$l_{H,i}(x) = \begin{cases} 1 & \text{if } \sum_c l_{H,i}^c(x) > K/2 \\ 0 & \text{otherwise} \end{cases} \qquad (12)$$

where $K$ is the number of colour channels. Also, equations (6) and (7), as well as equations (11) and (12), give rise to a binary measure $l$. In alternative embodiments of the invention, $l$ may also take values other than 0 or 1. For example, this may be achieved by replacing equation (12) with equation (13)

$$l_{H,i}(x) = \sum_c l_{H,i}^c(x) \qquad (13)$$

according to which $l$ takes values in [0,K], where $K$ is the number of colour channels. Then, the subsequent characteristic geometric pattern detection process will be applied onto this non-binary function $I$. For example, both the Hough and the Radon transforms are capable of processing non-binary functions.

Furthermore, in the embodiments previously described, all the colour channels of the video frames are used for the detection of wipe transitions. In alternative embodiments of the invention, only a subset of the channels may be used, e.g. only the luminance channel Y, or each channel may be given a different importance or weight in the calculation of $I$, e.g. during the calculation of s when $I$ is calculated according to the method of equations (6) and (7), or during the calculation of $I$ in equation (12) when $I$ is calculated according to the method of equations (11) and (12).

Also, in the embodiments previously described, all the pixels in each video frame are used for the detection of wipe transitions. In alternative embodiments of the invention, only a portion of each frame may be used, such as the central portion of each frame. Such processing could provide advantages, e.g. when the video is a widescreen video and the black bars at the top and bottom of each frame are encoded as part of the frame.

Furthermore, it is obvious to a person skilled in the art that the 2D function $I$, as illustrated in FIG. 6, may be processed spatially prior to the application of the Hough transform or other characteristic geometric pattern detection process. For example, a spurious noise elimination algorithm may be used to set to zero values which are not zero but are surrounded by zero values. Such processes can improve the stability of the subsequent processing.

The method described here may be applied to videos of varying spatial resolutions. In a preferred embodiment of the invention, high resolution frames will undergo some subsampling before processing, in order to accelerate the processing of the video and also to alleviate instabilities that arise from noise, compression, motion and the like. In particular, the method described here operates successfully at the DC resolution of compressed video, typical a few tens of pixels horizontally and vertically. An added advantage of this is that compressed videos need not be fully decoded to be processed; I-frames can be easily decoded at the DC level, while DC-motion compensation can be used for the other types of frames.

In the embodiments previously described, processing is performed by a programmable computer processing apparatus using processing routines defined by computer program instructions. However, some, or all, of the processing could be performed using hardware instead.

Other modifications and variations are, of course, possible.

**Claims**

1. A method of processing a sequence of video frames to determine whether a wipe transition exits between shots of the sequence, the method comprising:

   (a) for each of a plurality of frames in the sequence, generating difference values representing differences between the frame and a preceding frame at at least some of the pixel positions in the frame (S310; S910-960), and projecting the difference values onto a base to generate a plurality of projection values for the frame, such that each projection value is associated with a respective position on the base and comprises a combined value derived from the difference values of a respective plurality of pixels (S320-340; S970-990);
   (b) for each base of a plurality of different frames, processing the projection values to calculate a respective abrupt shot transition measure for each position on the base representing the likelihood that an abrupt shot transition has taken place in the pixels from whose difference values the projection value for that position was derived (S510); and
   (c) determining whether a wipe transition is present by determining whether a predetermined geometric pattern exists in a two-dimensional arrangement comprising the abrupt shot transition measures of the bases of a plurality of frames arranged in an order corresponding to the temporal sequence of the frames (S520, S530).

2. A method according to Claim 1, wherein, in step (a), the difference values for each of the plurality of frames are generated by calculating differences between the pixel values of the at least some pixels in the frame and the pixel values of the pixels at the same spatial positions in a preceding frame.

3. A method according to Claim 1, wherein, in step (a), the difference values for each of the plurality of frames are generated by transforming the pixel values of the at least some pixels in the frame and the pixel values of the pixels at the same spatial positions in a preceding frame, and calculating differences between the transformed values in the frame and the preceding frame.

4. A method according to Claim 3, wherein, in step (a), the pixel values are transformed using a wavelet transform.

5. A method according to any preceding claim, wherein:

step (a) is performed a plurality of times for each frame, each time using pixel values from a different colour channel thereby generating a plurality of projection values for each position on the base for the frame, each of the plurality of projection values being generated using pixel values from a different colour channel; and
in step (b), the abrupt shot transition measure for each position on the base for a frame is calculated using the plurality of projection values for the position.

6.  A method according to any preceding claim, wherein, in step (b), the abrupt shot transition measure for each position on the base for a frame is calculated by comparing the projection value for the position with a threshold.

7.  A method according to Claim 6, wherein, in step (b), the abrupt shot transition measure for each position on the base for a frame is calculated by comparing the projection value for the position with a threshold and also with the projection values for the same position on the bases for frames within a temporal window of past and future frames.

8.  A method according to any preceding claim, wherein, in step (c):

    the abrupt shot transition measures in the two-dimensional arrangement are transformed using a transform which transforms points to sinusoids in a transform space; and
    the transform space is processed to detect peaks therein.

9.  Apparatus for processing a sequence of video frames to determine whether a wipe transition exits between shots of the sequence, the apparatus comprising:

    a difference value calculator (55, 60) operable to generate, for each of a plurality of frames in the sequence, difference values representing differences between the frame and a preceding frame at at least some of the pixel positions in the frame;
    a projection calculator (70) operable to project the difference values onto a base to generate a plurality of projection values for each of the plurality of frames, such that each projection value is associated with a respective position on the base and comprises a combined value derived from the difference values of a respective plurality of pixels;
    an abrupt shot transition detector (80) operable to process the projection values for each base of a plurality of different frames, to calculate a respective abrupt shot transition measure for each position on the base representing the likelihood that an abrupt shot transition has taken place in the pixels from whose difference values the projection value for that position was derived; and
    a geometric pattern detector (90) operable to determine whether a wipe transition is present by determining whether a predetermined geometric pattern exists in a two-dimensional arrangement comprising the abrupt shot transition measures of the bases of a plurality of frames arranged in an order corresponding to the temporal sequence of the frames.

10. Apparatus according to Claim 9, wherein the difference value calculator (55, 60) is operable to generate the difference values for each of the plurality of frames by transforming the pixel values of the at least some pixels in the frame and the pixel values of the pixels at the same spatial positions in a preceding frame, and calculating differences between the transformed values in the frame and the preceding frame.

11. Apparatus according to Claim 9 or Claim 10, wherein:

    the difference calculator (55, 60) is operable to perform the processing to generate difference values a plurality of times for each frame, each time using pixel values from a different colour channel so as to generate a plurality of projection values for each position on the base for the frame, each of the plurality of projection values being generated using pixel values from a different colour channel; and
    the abrupt shot transition detector (80) is operable to calculate the abrupt shot transition measure for each position on the base for a frame using the plurality of projection values for the position.

12. Apparatus according to any of Claims 9 to 11, wherein the abrupt shot transition detector (80) is operable to calculate the abrupt shot transition measure for each position on the base for a frame by comparing the projection value for the position with a threshold.

13. Apparatus according to Claim 12, wherein the abrupt shot transition detector (80) is operable to calculate the abrupt shot transition measure for each position on the base for a frame by comparing the projection value for the position with a threshold and also with the projection values for the same position on the bases for frames within a temporal window of past and future frames.

14. Apparatus according to any of Claims 9 to 13, wherein the geometric pattern detector (90) comprises:

a data transformer operable to transform the abrupt shot transition measures in the two-dimensional arrangement using a transform which transforms points to sinusoids in a transform space; and
a peak detector operable to process the transform space to detect peaks therein.

15. A computer program product carrying computer program instructions to program a programmable processing apparatus to become operable to perform a method as set out in at least one of Claims 1 to 8.

(a)

(b)

(c)

(d)

# FIG. 1

FIG. 2

$f^c_i(x,y)$

$f^c_{i-1}(x,y)$ → Absolute Difference ~ S310

$d^c_i(x,y)$

| Horizontal Projection ~ S320 | Vertical Projection ~ S330 | Diagonal Projection ~ S340 |

$p^c_{H,i}(x)$   $p^c_{V,i}(y)$   $p^c_{D,i}(z)$

Normalisation ~ S350

$p'^c_{D,i}(z)$

# FIG. 3

(a)

(b)

(c)

(d)

(e)

(f)

x=0        x=M-1        y=0        y=N-1        x=0,y=0        x=M-1,y=N-1

# FIG. 4

$$p^c_{H,i}(x)$$

$$p^c_{H,i-w}(x)$$
...
$$p^c_{H,i+w}(x)$$

| Regional Shot Transition Detection | S510 |

$$I_{H,i}(x)$$

$$I_{H,i-q}(x)$$
...
$$I_{H,i-1}(x)$$

| Characteristic Geometric Pattern Detection | S520 |

Set S of pattern parameters

| Wipe Limit Detection | S530 |

Detected wipe transitions

# FIG. 5

**FIG. 6**

FIG. 7

$x=0$    $x=M$-1

# FIG. 8

FIG. 9

$f^o{}_i(x,y)$

| Column Transform | S910 | Row Transform | S920 | Diagonal Transform | S930 |

$f^c{}_{COL,i}(x,y)$     $f^c{}_{ROW,i}(x,y)$     $f^c{}_{DIA,i}(x,y)$

$f^c{}_{COL,i-1}(x,y)$ → Absolute Difference — S940     $f^c{}_{ROW,i-1}(x,y)$ → Absolute Difference — S950     $f^c{}_{DIA,i-1}(x,y)$ → Absolute Difference — S960

$d^c{}_{COL,i}(x,y)$     $d^c{}_{ROW,i}(x,y)$     $d^c{}_{DIA,i}(x,y)$

Horizontal Projection — S970     Vertical Projection — S980     Diagonal Projection — S990

$p^o{}_{H,i}(x)$     $p^o{}_{V,i}(y)$     $p^c{}_{D,i}(z)$

Normalisation — S995

$p'^c{}_{D,i}(z)$

# FIG. 10

# EUROPEAN SEARCH REPORT

Application Number

EP 09 15 2137

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FERNANDO W A C ET AL: "Wipe scene change detection in video sequences" IMAGE PROCESSING, 1999. ICIP 99. PROCEEDINGS. 1999 INTERNATIONAL CONFERENCE ON KOBE, JAPAN 24-28 OCT. 1999, PISCATAWAY, NJ, USA,IEEE, US, vol. 3, 24 October 1999 (1999-10-24), pages 294-298, XP010368865 ISBN: 978-0-7803-5467-8 * sections 1, 4 * | 1-3, 6-10, 13-15 | INV. H04N5/14 |
| X | CHONG-WAH NGO ET AL: "Video Partitioning by Temporal Slice Coherency" IEEE TRANSACTIONS ON CIRCUITS AND SYSTEMS FOR VIDEO TECHNOLOGY, IEEE SERVICE CENTER, PISCATAWAY, NJ, US, vol. 11, no. 8, 1 August 2001 (2001-08-01), XP011014230 ISSN: 1051-8215 * figures 6,8 * * equations (1) - (3), (12), (13) * * sections II, IV, V * | 1,3-5, 8-11,14, 15 | |
| X | MIN GYO CHUNG ET AL: "A scene boundary detection method" IMAGE PROCESSING, 2000. PROCEEDINGS. 2000 INTERNATIONAL CONFERENCE ON SEPTEMBER 10-13, 2000, IEEE, PISCATAWAY, NJ, USA, vol. 3, 10 September 2000 (2000-09-10), pages 933-936, XP010529622 ISBN: 978-0-7803-6297-0 * sections 1, 3 * * figure 3 * | 1,2,6,7, 9,12,13, 15 | TECHNICAL FIELDS SEARCHED (IPC) H04N G06T G11B |
| X | KR 2001 0014443 A (KOREA TELECOMMUNICATION [KR]) 26 February 2001 (2001-02-26) * figures 3-5,7 * | 1,2,6,9, 12 | |

-/--

The present search report has been drawn up for all claims

| Place of search | Date of completion of the search | Examiner |
|---|---|---|
| Munich | 26 May 2009 | Keck, Wolfram |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 09 15 2137

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2007/138858 A (NIPPON ELECTRIC CO [JP]; IWAMOTO KOTA [JP]) 6 December 2007 (2007-12-06) | 1-15 | |
| A | & EP 2 028 619 A (NIPPON ELECTRIC CO [JP]) 25 February 2009 (2009-02-25) * paragraphs [0053], [0054] * | 1-15 | |

-----

TECHNICAL FIELDS
SEARCHED      (IPC)

The present search report has been drawn up for all claims

| Place of search | Date of completion of the search | Examiner |
|---|---|---|
| Munich | 26 May 2009 | Keck, Wolfram |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**ANNEX TO THE EUROPEAN SEARCH REPORT**
**ON EUROPEAN PATENT APPLICATION NO.**

EP 09 15 2137

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2009

| Patent document cited in search report | | Publication date | Patent family member(s) | | Publication date |
|---|---|---|---|---|---|
| KR 20010014443 | A | 26-02-2001 | NONE | | |
| WO 2007138858 | A | 06-12-2007 | EP | 2028619 A1 | 25-02-2009 |
| | | | KR | 20090006861 A | 15-01-2009 |
| EP 2028619 | A | 25-02-2009 | WO | 2007138858 A1 | 06-12-2007 |
| | | | KR | 20090006861 A | 15-01-2009 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1640914 A2
- EP 1640913 A1
- US 5990980 A

- US 6473459 B1
- US 7050115 B2

### Non-patent literature cited in the description

- **Wu, M. ; Wolf, W. ; Liu, B.** An Algorithm for Wipe Detection. *Proceedings of 5th IEEE International Conference on Image Processing,* 1998, vol. 1, 893-897
- **Ngo, C. W. ; Pong, T. C. ; Chin, R. T.** Detection of Gradual Transitions through Temporal Slice Analysis. *Proceedings of 18th IEEE International Conference on Computer Vision and Pattern Recognition,* 1999, vol. 1, 36-41
- **Ngo, C. W. ; Pong, T. C. ; Chin, R. T.** A Robust Wipe Detection Algorithm. *Proceedings of 4th Asian Conference on Computer Vision,* 2000, 246-251

- **Drew, M. S. ; Li, Z.-N. ; Zhong, X.** Video Dissolve and Wipe Detection via Spatio-Temporal Images of Chromatic Histogram Differences. *Proceedings of 7th IEEE International Conference in mage Processing,* 2000, vol. 3, 929-932
- **van Ginkel, M. ; Hendriks, C. L. ; van Vliet, L. J.** A short introduction to the Radon and Hough transforms and how they relate to each other. *Number QI-2004-01 in the Quantitative Imaging Group Technical Report Series*